**Europäisches Patentamt**

**European Patent Office**

**Office européen des brevets**

(19)

(11) Veröffentlichungsnummer : **0 247 588**
**B1**

(12) **EUROPÄISCHE PATENTSCHRIFT**

(45) Veröffentlichungstag der Patentschrift :
**15.03.89**

(51) Int. Cl.⁴ : **F 16 D 65/08**

(21) Anmeldenummer : **87107695.6**

(22) Anmeldetag : **26.05.87**

(54) **Innenbacken-Trommelbremse.**

(30) Priorität : **27.05.86 DE 8614259 U**

(43) Veröffentlichungstag der Anmeldung :
**02.12.87 Patentblatt 87/49**

(45) Bekanntmachung des Hinweises auf die Patenterteilung : **15.03.89 Patentblatt 89/11**

(84) Benannte Vertragsstaaten :
**DE FR GB IT SE**

(56) Entgegenhaltungen :
**EP--A-- 0 066 090**
**GB--A-- 2 087 995**
**US--A-- 1 928 095**
**US--A-- 2 167 607**
**US--A-- 2 213 003**
**US--A-- 2 282 439**

(73) Patentinhaber : **LUCAS INDUSTRIES public limited company**
**Great King Street**
**Birmingham, B19 2XF West Midlands (GB)**

(72) Erfinder : **Giering, Wilfried Theodor**
**Poststrasse 20**
**D-5442 Mendig (DE)**
Erfinder : **Micke, Sigmar Heinz-Peter**
**Weidtmanstrasse 39**
**D-5400 Koblenz-Metternich (DE)**
Erfinder : **Holl, Franz-Helmut**
**Im Baspelt 3**
**D-5581 Masterhausen (DE)**
Erfinder : **Thielecke, Jörg**
**Birkenweg 5**
**D-5416 Hillscheid (DE)**

(74) Vertreter : **Goetz, Rupert et al**
**Patentanwälte Wuesthoff- v. Pechmann-Behrens-Goetz Schweigerstrasse 2**
**D-8000 München 90 (DE)**

**EP 0 247 588 B1**

### Beschreibung

Die Erfindung betrifft eine Innenbacken-Trommelbremse mit

einer Bremstrommel, die eine kreiszylindrische innenliegende Bremsfläche aufweist und

mindestens einer Bremsbacke, die einen Belagträger und zwei in Umfangsrichtung hintereinander am Belagträger befestigte Belagabschnitte aufweist, wobei

jeder Belagabschnitt eine zumindest annähernd kreiszylindrische Reibfläche hat, deren Krümmungsradius kleiner als der Krümmungsradius der Bremsfläche ist und dessen Krümmungsmittelpunkt derart angeordnet ist, daß bei betätigter Bremse nur ein mittlerer Bereich der Reibfläche an der Bremsfläche anliegt.

Bei Innenbacken-Trommelbremsen ist es wünschenswert, daß die Reibflächen sich bei jeder Bremsung vollständig an die Bremsfläche der Trommel anlegen. Dieser wünschenswerte Zustand setzt voraus, daß der Krümmungsradius der Reibflächen genau mit dem Krümmungsradius der Bremsfläche der Trommel übereinstimmt und die Trommel sich weder durch Kraft- noch durch Temperatureinwirkung verformt. Die Einzelteile jeder Innenbacken-Trommelbremse weisen jedoch unvermeidliche Herstellungstoleranzen auf, die sich beim Zusammenbau der Einzelteile summieren. Dabei darf nicht zugelassen werden, daß der Krümmungsradius einer Reibfläche an einer Bremsbacke größer als der Krümmungsradius der Bremsfläche an der Trommel ist, denn dies hätte zur Folge, daß die Bremstrommel nur von der vorderen und hinteren Kante der Reibfläche berührt werden würde, wodurch das Verhältnis zwischen der eingeleiteten Bremsbetätigungskraft und der beim Bremsen auftretenden Umfangskraft sehr groß werden und die Bremse blockieren könnte.

Man ist deshalb gezwungen, den Krümmungsradius der Reibflächen sämtlicher Bremsbeläge oder Belagabschnitte so zu wählen, daß er auch bei ungünstigem Zusammentreffen sämtlicher in Frage kommenden Herstellungstoleranzen kleiner ist als der Krümmungsradius der Bremsfläche an der Trommel. Dies hat allerdings bei Bremsbelägen, die sich mit einheitlicher Krümmung über den gesamten Umfang des zugehörigen Belagträgers erstrecken, die nachteilige Folge, daß der Reibbelag, solange er neu ist, nur in seinem mittleren Bereich beim Bremsen wirksam wird, sodaß die betreffende Bremsbacke ihre rechnerische Umfangskraft erst nach und nach mit zunehmendem Belagverschleiß und entsprechender Anpassung des Krümmungsradius der Reibflächen an den Krümmungsradius der Bremsfläche erreicht. In der Zwischenzeit, während des sogenannten Einlaufens der Reibbeläge, konzentriert sich der Energieumsatz beim Bremsen auf den mittleren Bereich der Bremsbacke, der dadurch überhitzt werden und infolgedessen Risse bilden kann.

Um diese Nachteile zu vermeiden, ist eine Innenbacken-Trommelbremse der eingangs beschriebenen Gattung geschaffen worden (GB-A-2 087 995). Es ist also der Reibbelag mindestens einer Bremsbacke in zwei Belagabschnitte unterteilt worden, deren Reibflächen je für sich einen Krümmungsradius haben, welcher kleiner ist als der Krümmungsradius der Bremsfläche an der Trommel. Damit wird erreicht, daß die betreffende Bremsbacke von Anfang an mit dem mittleren Bereich jedes der beiden Belagabschnitte beim Bremsen wirksam wird und jeder dieser Bereiche sich mit zunehmendem Belagverschleiß verhältnismäßig rasch vergrößert, bis die Reibflächen schließlich vollständig an den Krümmungsradius der Bremsfläche an der Trommel angepaßt sind.

Der Erfindung liegt die Aufgabe zugrunde, bei einer Innenbacken-Trommelbremse die Einlaufphase, während der sich die Reibflächen allmählich an die Bremsfläche der Trommel anpassen, noch weiter zu verkürzen und dadurch die Herstellung der Bremse mit gröberen Toleranzen zu ermöglichen.

Die Aufgabe ist bei einer Innenbacken-Trommelbremse der eingans beschriebenen Gattung erfindungsgemäß dadurch gelöst, daß in einem rechtwinkligen Koordinatensystem, dessen Ursprung auf der Achse der Bremstrommel liegt, und dessen Abszisse von einer Mittellinie zwischen den beiden Belagabschnitten gebildet ist, der Mittelpunkt jedes Belagabschnittes bei betätigter Bremse einen Abszissenabstand hat, der kleiner als der Ordinatenabstand ist.

Damit wird erreicht, daß beim Betätigen einer Bremse mit neuen Bremsbelägen die an einem gemeinsamen Belagträger befestigten Belagabschnitte an ihren einander zugewandten Enden einen schmaleren Spalt zwischen ihrer Reibfläche und der Bremsfläche der Trommel freilassen als an ihren voneinander abgewandten Enden, an denen eine Kantenberührung zwischen Reibbelag und Bremsfläche der Trommel auf jeden Fall vermieden werden muß. Die schmalen Spalte, die an den einander zugewandten Enden der Belagabschnitte zunächst freigelassen werden, schließen sich infolge von Belagverschleiß rasch, sodaß die rechnerische Umfangskraft beim Bremsen bald erreicht wird.

Bei bevorzugten Ausführungsformen der Erfindung ist der Abszissenabstand des Krümmungsmittelpunkts der Reibfläche jedes Belagabschnittes 0,4 bis 0,6 mal so groß wie der Ordinatenabstand.

Schließlich ist es vorteilhaft, wenn der Belagträger in an sich bekannter Weise einen kreisförmigen äußeren Umriß mit einem Krümmungsradius hat, der größer als der Krümmungsradius der Bremsfläche an der Bremstrommel ist.

Ein Ausführungsbeispiel der Erfindung wird im folgenden anhand einer schematischen Zeichnung mit weiteren Einzelheiten erläutert.

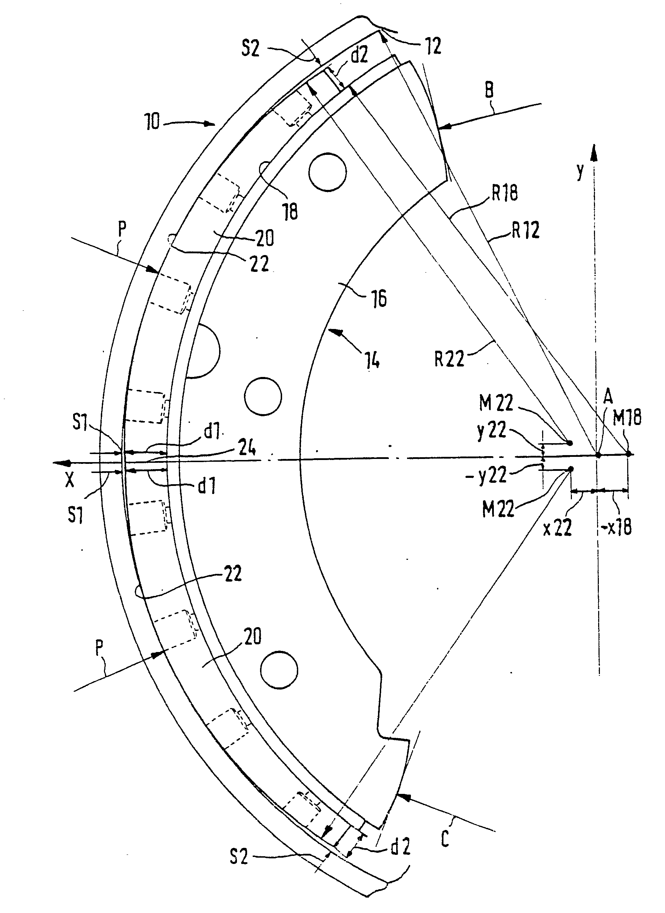

Die Zeichnung zeigt einen Teil einer Bremstrommel 10, die eine kreiszylindrische Bremsfläche 12 mit dem Krümmungsradius R12 aufweist. In die Achse A der Bremstrommel 10, von welcher der Radius R12 ausgeht, ist der Ursprung eines gedachten rechtwinkligen Koordinatensystems mit der Abszisse X und der Ordinate Y gelegt.

Der Bremstrommel 10 sind zwei Bremsbacken 14 zugeordnet, von denen nur eine dargestellt ist. Jede der Bremsbacken 14 hat einen aus Stahlblech bestehenden Belagträger 16 mit T-förmigem Profil und mit einem äußeren Umriß 18, dessen Krümmungsradius R18 größer ist als der Krümmungsradius R12 und dementsprechend von einem Krümmungsmittelpunkt M18 ausgeht, der von der Bremsbacke 14 aus gesehen jenseits der Ordinate Y liegt und den negativen Abszissenwert —x18 hat. Der Ordinatenwert des Krümmungsmittelpunktes M18 ist 0, da der Umriß 18 symmetrisch in bezug auf die Abszisse X angeordnet ist.

Am Belägträger 16 der dargestellten Bremsbacke 14 sind zwei Belagabschnitte 20 befestigt, die in bezug zur Abszisse X symmetrisch gestaltet und angeordnet sind. Wegen des Überschusses von R18 gegenüber R12 haben beide Belagabschnitte 20 die Form eines in Richtung von der Abszisse X weg schlanker werdenden, gebogenen Keils. Jeder der Belagabschnitte 20 hat eine zumindest annähernd kreiszylindrische Reibfläche 22 mit einem Krümmungsradius R22, der kleiner als der Krümmungsradius R12 der Bremsfläche 12 ist und von einem Krümmungsmittelpunkt M22 mit dem Abszissenwert x22 ausgeht. Die Ordinatenwerte y22 und —y22 der Krümmungsmittelpunkte M22 sind dem Betrag nach gleich groß, unterscheiden sich aber im Vorzeichen, da der Krümmungsmittelpunkt M22 der oberhalb der Abszisse X angeordneten Reibfläche 22 oberhalb der Abszisse liegt, und umgekehrt.

Die Bremsbacke 14 ist in neuem Zustand gezeichnet, vor jeglicher Verformung ihrer Bestandteile und insbesondere vor jeglichem Verschleiß der Belagabschnitte 20. Dabei haben die Belagabschnitte 20 an ihren einander zugewandten Enden eine Dicke d1, die erheblich größer ist als die Dicke d2 an den voneinander abgewandten Enden der Belagabschnitte. Insgesamt bilden die beiden Belagabschnitte 20 einen sichelförmigen Belag ; sie sind nur der vereinfachten Herstellbarkeit halber getrennt bearbeitet und am Belagträger 16 festgenietet worden und lassen zwischen sich einen schmalen Zwischenraum 24 frei. Ohne Veränderung der dargestellten Form ihrer Reibflächen 22 könnten die beiden Belagabschnitte 20 in einem Stück hergestellt werden ; in diesem Fall ist der Zwischenraum 24 durch Reibmaterial überbrückt ; die Dicke einer solchen Brücke soll jedoch d1 nicht überschreiten.

Die Zeichnung zeigt die Bremsbacke 14 in einer Betätigungsstellung, die sie einnimmt, wenn auf ein Ende des Belagträgers 16 eine Betätigungskraft B einwirkt und das andere Ende des Belagträgers mit einer Stützkraft C abgestützt wird, wobei die Kräfte B und C gerade so groß sind, daß sie die Reibflächen 22 an die Bremsfläche 12 anlegen und an dieser Reaktionskräfte P hervorrufen, aber keines der Teile der Bremsbacke 14 verformen. Unter diesen Bedingungen lassen die Belagabschnitte 20 an ihren einander zugewandten Enden je einen keilförmigen Spalt von der maximalen Breite s1 zwischen ihrer Reibfläche 22 und der Bremsfläche 12 frei. An den voneinander abgewandten Enden der Belagabschnitte 20 bleiben zwischen deren Reibflächen 22 und der Bremsfläche 12 keilförmige Spalte von der maximalen Breite s2 frei. Bei der dargestellten Lage der Krümmungsmittelpunkte M22, also bei deren Koordinatenverhältnis y22 : x22 in der Größenordnung von 1 : 2 ist die Spaltbreite s1 erheblich kleiner als die Spaltbreite s2. Die Spalte mit der Spaltbreite s1 verschwinden dementsprechend bald, wenn der Verschleiß der Belagabschnitte 20 beginnt.

## Patentansprüche

1. Innenbacken-Trommelbremse mit einer Bremstrommel (10), die eine kreiszylindrische innenliegende Bremsfläche (12) aufweist, und mindestens einer Bremsbacke (14), die einen Belagträger (16) und zwei in Umfangsrichtung hintereinander am Belagträger (16) befestigte Belagabschnitte (20) aufweist, wobei jeder Belagabschnitt (20) eine zumindest annähernd kreiszylindrische Reibfläche (22) hat, deren Krümmungsradius (R22) kleiner als der Krümmungsradius (R12) der Bremsfläche (12) ist, und deren Krümmungsmittelpunkt (M22) derart angeordnet ist, daß bei betätigter Bremse nur ein mittlerer Bereich der Reibfläche (22) an der Bremsfläche (12) anliegt, dadurch gekennzeichnet, daß in einem rechtwinkligen Koordinatensystem (X, Y), dessen Ursprung auf der Achse (A) der Bremstrommel (10) liegt und dessen Abszisse (X) von einer Mittellinie zwischen den beiden Belagabschnitten (20) gebildet ist, der Krümmungsmittelpunkt (M22) jeder Reibfläche (22) bei betätigter Bremse einen Abszissenabstand (y22) hat, der kleiner als der Ordinatenabstand (x22) ist.

2. Innenbacken-Trommelbremse nach Anspruch 1, dadurch gekennzeichnet, daß der Abszissenabstand (y22) des Krümmungsmittelpunkts (M22) 0,4 bis 0,6 mal so groß ist wie der Ordinatenabstand (x22).

3. Innenbacken-Trommelbremse nach Anspruch 1 oder 2, dadurch gekennzeichnet, daß der Belagträger (16) in an sich bekannter Weise einen kreisförmigen äußeren Umriß (18) hat, dessen Krümmungsradius (R18) größer als der Krümmungsradius (R12) der Bremsfläche (12) an der Bremstrommel (10) ist.

## Claims

1. An internal shoe drum brake, comprising a brake drum (10) which has a circular cylindrical internal braking surface (12) and at least one brake shoe (14) which comprises a lining support member (16) and two lining sections (20) fastened one behind the other in circumferential direction to the support member (16),

each lining section (20) having an at least approximately circular cylindrical friction surface (22) the radius of curvature (R22) of which is smaller than the radius of curvature (R12) of the braking surface (12) and the center of curvature (M22) of which is located such that only a central portion of the friction surface (22) engages the braking surface (12) upon actuation of the brake, characterized in that, in a rectangular coordinate system (X, Y) the origin of which lies on the axis (A) of the brake drum (10) and the abscissa (X) of which is formed by a center line between the two lining sections (20), the center of curvature (M22) of each friction surface (22) has a distance (y22) from the abscissa which is smaller than the distance (x22) from the ordinate, upon actuation of the brake.

2. The internal shoe drum brake as claimed in claim 1, characterized in that the distance (ẏ22) from the abscissa of the center of curvature (M22) is from 0.4 to 0.6 times as great as the distance (x22) from the ordinate.

3. The internal shoe drum brake as claimed in claim 1 or 2, characterized in that the lining support member (16) in per se known manner has a circular outer periphery (18) the radius of curvature (R18) of which is greater than the radius of curvature (R12) of the braking surface (12) at the brake drum (10).

**Revendications**

1. Frein à tambour à mâchoires intérieures, comportant

un tambour de frein (10) qui présente une surface de freinage (12) cylindrique circulaire située à l'intérieur, et

au moins une mâchoire de frein (14) qui présente un porte-garniture (16) et deux tronçons (20) de garniture fixés l'un derrière l'autre, dans la direction périphérique, sur le porte-garniture (16), étant précisé que

chaque tronçon de garniture (20) a une surface de friction (22) au moins approximativement cylindrique circulaire dont le rayon de courbure (R22) est inférieur au rayon de courbure (R12) de la surface de freinage (12) et dont le centre de courbure (M22) est disposé de façon telle que, lorsque le frein est activé, seule, une zone médiane de la surface de friction (22) s'appuie contre la surface de freinage (12), caractérisé en ce que, dans un système de coordonnées rectangulaires (X, Y) dont l'origine est sur l'axe (A) du tambour de frein (10) et dont l'axe des abscisses (X) est formé d'un axe entre les deux tronçons de garniture (20), le centre de courbure (M22) de chaque surface de friction (22) a, lorsque le frein est activé, une ordonnée (y22) qui est inférieure à l'abscisse (x22).

2. Frein à tambour à mâchoires intérieures selon la revendication 1, caractérisé en ce que l'ordonnée (y22) du centre de courbure (M22) vaut de 0,4 à 0,6 fois l'abscisse (x22).

3. Frein à tambour à mâchoires intérieures selon la revendication 1 ou 2, caractérisé en ce que le porte-garniture (16) présente, de façon connue en soi, un contour extérieur circulaire (18) dont le rayon de courbure (R18) est supérieur au rayon de courbure (R12) de la surface de freinage (12) du tambour de frein (10).